(19) Europäisches Patentamt
European Patent Office
Office européen des brevets

(11) Veröffentlichungsnummer: **0 084 321**
**B1**

# (12) EUROPÄISCHE PATENTSCHRIFT

(45) Veröffentlichungstag der Patentschrift: **27.11.85**

(51) Int. Cl.⁴: **C 08 F 283/12**, C 08 F 299/08

(21) Anmeldenummer: **83100042.7**

(22) Anmeldetag: **05.01.83**

(54) **Vernetzbare Pfropfpolymerisat-Dispersionen aus Hydrogensiloxan-Gruppen und Si-Vinyl-Gruppen enthaltenden Organopolysiloxanen.**

(30) Priorität: **16.01.82 DE 3201194**

(43) Veröffentlichungstag der Anmeldung: **27.07.83 Patentblatt 83/30**

(45) Bekanntmachung des Hinweises auf die Patenterteilung: **27.11.85 Patentblatt 85/48**

(84) Benannte Vertragsstaaten: **AT BE CH DE FR GB IT LI SE**

(56) Entgegenhaltungen:
**EP-A-0 002 744**
**EP-A-0 004 947**
**FR-A-2 352 032**
**US-A-3 249 581**

**CHEMICAL ABSTRACTS, Band 95, Nr. 3, August 1981, Seite 31, Nr. 44122g, Columbus, Ohio, USA**
**CHEMICAL ABSTRACTS, Band 94, Nr. 6, März 1981, Seite 74, Nr. 85490y, Columbus, Ohio, USA**

(73) Patentinhaber: **BAYER AG, Konzernverwaltung RP Patentabteilung, D-5090 Leverkusen 1 Bayerwerk (DE)**

(72) Erfinder: **Alberts, Heinrich, Dr., Schulstrasse 1A, D-5068 Odenthal (DE)**
Erfinder: **Steinberger, Helmut, Dr., Winand-Rossi-Strasse 36, D-5090 Leverkusen (DE)**

**EP 0 084 321 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind vernetzbare Pfropfpolymerisat-Dispersionen aus Si-H-Gruppen und Si-Vinyl-Gruppen enthaltenden Organopolysiloxanen, die ggf. weitere Polydiorganosiloxane enthalten, und Vinylmonomeren sowie die aus diesen Pfropfpolymerisat-Dispersionen erhältlichen wässerigen Dispersionen.

Die Pfropfmodifizierung von Organopolysiloxanen mit Vinylmonomeren wird beispielsweise in GB-PS Nrn. 766528, 806582, 869482 und DE-AS Nr. 1694973 beschrieben. Ferner ist aus US-PS Nr. 4166078 bekannt, Si-H-Siloxane durch Pfropfung mit Vinylmonomeren zu modifizieren. Weiterhin wird in US-PS Nr. 4172101 die Pfropfmodifizierung von vinylsubstituierten Polysiloxanen beschrieben.

Ferner wird in W. Noll, „Chemie und Technologie der Silicone"; Verlag Chemie, Weinheim, Bergstr., 2. Aufl. (1968), S. 341 beschrieben, dass durch Kombination von Si-H-Siloxanen mit Si-Vinylsiloxanen in Gegenwart von Radikalbildnern vernetzte Produkte erhalten werden.

Überraschenderweise wurde gefunden, dass bei der radikalischen Polymerisation von Vinylmonomeren in Gegenwart von Mischungen aus Si-H-Siloxanen und Si-Vinylsiloxanen unvernetzte, zum Teil niedrigviskose Pfropfpolymerisat-Dispersionen erhalten werden.

Gegenstand der vorliegenden Erfindung sind Pfropfpolymerisatdispersionen enthaltend

1. als Pfropfsubstrat 1 bis 99 Gew.-% Organopolysiloxane, bestehend aus einem Gemisch von
   A. Si-H-Gruppen enthaltenden Organopolysiloxanen,
   B. Vinylgruppen enthaltenden Organopolysiloxanen und ggf.,
   C. Polydiorganosiloxanen, und
2. als aufgepfropfte Polymerphase 99 bis 1 Gew.% polymerisierte Einheiten von Vinylmonomeren, wobei die Summe der Komponenten 1 und 2 stets 100 Gew.-% beträgt.

Ferner sind Gegenstand der Erfindung Pfropfpolymerisatdispersionen enthaltend als

1. Pfropfsubstrat 1 bis 99 Gew.-%, vorzugsweise 24 bis 76 Gew.-%, Organopolysiloxankomponente, bestehend aus einem Gemisch von
   A) 1 bis 99 Gew.-%, vorzugsweise 5 bis 85 Gew.-% Si-H-Gruppen enthaltenden Organopolysiloxanen,
   B) 99 bis 1 Gew.-%, vorzugsweise 95 bis 15 Gew.-% Vinylgruppen enthaltenden Organopolysiloxanen und ggf.
   C) 0 bis 50 Gew.-%, vorzugsweise 0 bis 35 Gew.-% Polydiorganosiloxanen, und
2. als aufgepfropfte Polymerphase 99 bis 1 Gew.-%, vorzugsweise 76 bis 24 Gew.-% polymerisierte Einheiten aus Vinylmonomeren, wobei die Summe der Komponenten 1 A-C und 1 und 2 jeweils 100 Gew.-% beträgt.

Des weiteren ist Gegenstand der Erfindung ein Verfahren zur Herstellung von Pfropfpolymerisatdispersionen, dadurch gekennzeichnet, dass

I. 1 bis 98,999 Gew.-%, vorzugsweise 15 bis 79,9 Gew.-% Organopolysiloxankomponente, enthaltend
   A) 1 bis 99 Gew.-%, vorzugsweise 5 bis 85 Gew.-% Si-H- Gruppen enthaltende Organopolysiloxane,
   B) 99 bis 1 Gew.-%, vorzugsweise 95 bis 15 Gew.-% Vinylgruppen enthaltende Organopolysiloxane,
   C) 0 bis 50 Gew.-%, vorzugsweise 0 bis 35 Gew.-% Polydiorganosiloxane, und

II. 98,999 bis 1 Gew.-%, vorzugsweise 83,5 bis 20 Gew.-% Vinylmonomere, vorzugsweise n-Butylacrylat,

III. 0 bis 10 Gew.-%, vorzugsweise 0 bis 2 Gew.-% Molekulargewichtsregler, und

IV. 0,001 bis 10 Gew.-%, vorzugsweise 0,1 bis 1,5 Gew.-% Initiator

bei Reaktionstemperaturen zwischen −20 und 250° C, vorzugsweise 40 bis 150° C und bei Reaktionsdrücken bis 500 bar, vorzugsweise bis 20 bar einer Polymerisationsreaktion unterzogen werden.

Ferner sind Gegenstand der Erfindung die aus den Pfropfpolymerisatdispersionen erhältlichen wässerigen Dispersionen.

Ferner sind Gegenstand der Erfindung die aus den erfindungsgemässen Dispersionen ggf. unter Zusatz von Füllstoffen, Härtungskatalysatoren und ggf. zusätzlichen Vernetzern erhaltenen vernetzten Massen.

Bei den eingesetzten Organopolysiloxanen handelt es sich um

A) Polymethylhydrogensiloxane der allgemeinen Formel

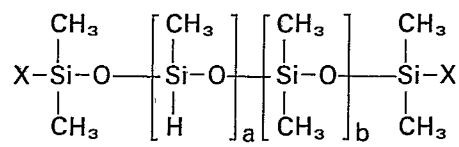

worin

a eine ganze Zahl zwischen 0 und 120,

b eine ganze Zahl zwischen 0 und 140, und

X eine Methylgruppe oder Wasserstoff bedeutet;

B) Vinylgruppenhaltige Polysiloxane der Formel

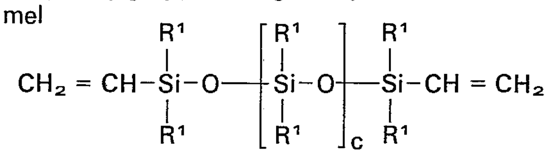

worin $R^1$ ausgewählt ist aus Alkylresten mit 1 bis 24 Kohlenstoffatomen, Arylresten, Vinylresten und Fluoralkylresten mit 1 bis 24 Kohlenstoffatomen, so dass das Polymer 0,0002 bis 3 Gew.-% Vinylgruppen enthält und c einen Wert hat, dass die Viskosität des Polymers von 100 bis 1 000 000 mPa·s bei 25° C variiert;

C) Polydiorganosiloxane der Formel

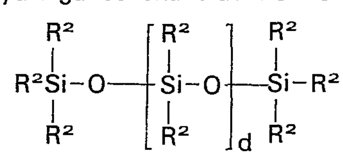

worin $R^2$ ausgewählt ist aus Alkylresten mit 1 bis 32 Kohlenstoffatomen und Arylresten und d einen Wert hat, dass die Viskosität des Polymers von 1 bis 1 000 000 mPa·s bei 25° C variiert.

Für die Vinylmonomere sollen beispielhaft aufgeführt sein:

Olefine wie Ethylen, Propylen, Isobutylen, Vinylester aliphatischer oder aromatischer Carbonsäuren, vorzugsweise Vinylacetat, Vinylpropionat, α,β-ungesättigte Mono- oder Dicarbonsäuren und ihre Derivate; erwähnt seien (Meth)-acrylsäure, Methyl(meth)acrylat, Ethyl(meth)acrylat, Propyl- bzw. isopropyl(meth)acrylat, n-Butyl-, iso- oder tert.-Butyl(meth)acrylat, 2-Etyhlhexyl(meth)-acrylat, (Meth)acrylamidderivate, (Meth)acrylnitril, Maleinsäureanhydrid, Maleinsäureamid, N-Alkyl-Maleinamide und -imide, Maleinsäurehalb- oder -diester, Vinylaromaten wie Styrol, α-Methylstyrol, 4-Chlorstyrol, Vinylchlorid, Vinylidenchlorid, Vinylidenfluorid, Tetrafluorethylen, Perfluorpropylen, Perfluoralkylgruppen enthaltende (Meth)Acrylsäureester, -amide und -sulfonamide der allgemeinen Formel $R_fSO_2\underset{R^3}{\underset{|}{N}}-H$, wobei $R_f$ ein Perfluoralkylrest mit 1 bis 24 C-Atomen und $R_3$ den (Meth)Acrylsäurerest darstellt, Vinylether wie Ethylvinylether oder n-Butylvinylether; aus der Reihe der Allylverbindungen seien angeführt Allylalkohol, Allylacetat, Isobutendiacetat, 2-Methylenpropandiol-1,3, Allylethylcarbonat, Allylphenylcarbonat.

Falls die Vernetzung oder Erhöhung der Molekulargewichte der Vinylharzphase gewünscht wird, können Divinylverbindungen oder Diallylverbindungen eingesetzt werden. Erwähnt seien Divinylbenzol, Divinyladipat, (Meth)Acrylsäureester mehrwertiger Alkohole wie z. B. Ethylenglykoldimethacrylat, Diethylenglykoldiacrylat und Divinylether, ferner Diallylether, Diallylcarbonate oder Diallylester, des weiteren Triallylcyanurat und Triallylcitrat.

Gegenstand der Erfindung ist weiterhin ein Verfahren zur Herstellung wässeriger Dispersionen bzw. Emulsionen aus den erfindungsgemässen vernetzbaren Copfropfpolymerisaten.

Die Herstellung der Pfropfpolymeren erfolgt dadurch, dass Mischungen aus Si-H-gruppenhaltigen und Vinylgruppen enthaltenden Polysiloxanen, ggf. weiteren Organopolysiloxanen und Vinylmonomeren einer radikalischen Polymerisation unterzogen werden. Man erhält stabile Pfropfpolymerisatdispersionen, die Organopolysiloxane und polymerisierte Einheiten eines oder mehrerer Vinylmonomere enthalten und die dadurch gekennzeichnet sind, dass sie über polymerisierte Einheiten der eingesetzten Vinylmonomeren querverbrückte Pfropfpolymere aus Organopolysiloxanen enthalten.

Im Verlaufe der radikalischen Pfropfreaktion findet neben der Polymerisation und Pfropfpolymerisation der Vinylmonomeren auch eine Monoaddition der Vinylmonomeren an die Si-H-Funktion der Methyl-H-Siloxane statt, etwa nach folgendem Reaktionsschema:

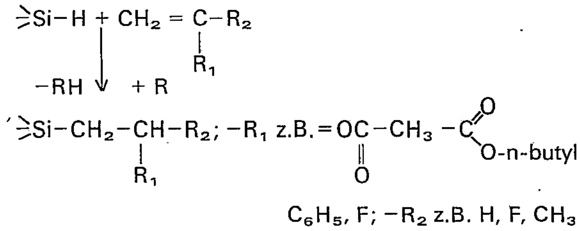


Durch diese Monoaddition wird die Polarität und Hydropholie der Polysiloxankette verändert und die Wechselwirkung mit dem textilen Substrat verbessert.

Die radikalische Polymerisation der Vinylmonomeren kann in an und für sich bekannter Weise mit Hilfe von Radikalbildnern, UV-Strahlen, α-, β- oder γ-Strahlen oder thermisch ohne weitere Zusätze gestartet werden. Die strahlungsinitiierte Polymerisation wird vorzugsweise in Gegenwart von Sensibilisatoren durchgeführt, vgl. z. B. A.D. Jenkins, A. Ledwith, „Reactivity, Mechanism and Structure in Polymer Chemistry", John Wiley + Son, London, New York, 1974, S. 465.

Um die radikalische Polymerisation der Vinylmonomeren zu starten, werden Radikalbildner in Mengen zwischen 0,001 bis 10, vorzugsweise 0,1 bis 1,5 Gew.-% bezogen auf die Gesamtmischung aus Organopolysiloxanen, Vinylmonomeren eingesetzt. Als Radikalbildner seien beispielhaft aufgeführt Azo-Initiatoren wie Azo-bis-iso-buttersäurenitril (AIBN); Azoester, Azo-Iminoester oder Azo-N-Alkylamide, Peroxide wie di-tert.-Butylperoxid, Di-cumylperoxid, Di-Benzoylperoxid, 2,4-Dichlorbenzoylperoxid, Perester wie Amylperpivalat tert.-Butylperpivalat, tert.-Butylperoctat, t-Butylperbenzoat, tert.-Butylperneodecanoat, Percarbonate wie Cyclohexylpercarbonat oder Bis-isopropylcarbonat oder Hydroperoxide wie z. B. Cumylhydroperoxid, tert.-Butylhydroperoxid.

Geeignete Initiatoren sind ferner Benzpinakol, Benzpinakolderivate oder andere thermisch labile hochsubstituierte Ethanderivate.

Die Polymerisation kann ferner mit Hilfe von Redoxsystemen bei tieferen Temperaturen als den rein thermischen Zerfallstemperaturen der Radikalbildner, gestartet werden.

Als Redox-Initiatoren seien beispielhaft erwähnt Kombinationen aus Peroxiden und Aminen, wie z. B. Benzoylperoxid und Triethylamin, Trialkylborverbindungen und Sauerstoff, Hydroperoxide und Sulfinsäuren, Formaldehyd oder Aldosen oder Kombinationen mit niederwertigen Übergangsmetallsalzen und Schwefeldioxid/Peroxid-Redoxsysteme.

Die Polymerisationsreaktion kann kontinuierlich oder diskontinuierlich, drucklos oder bei Reaktionsdrucken bis z. B. 500 bar, vorzugsweise bis 20 bar, bei Reaktionstemperaturen zwischen −20 und +250° C, vorzugsweise 40 bis 150° C, durchgeführt werden. Falls gewünscht, kann die Polymerisation auch in Gegenwart von Lösungsmitteln oder Verdünnungsmitteln durchgeführt werden, genannt seien Wasser, Alkohole, wie Methanol, Ethanol, tert.-Butanol, aliphatische oder aromatische Kohlenwasserstoffe, Halogen-Kohlenwasserstoffe wie Chlorbenzol oder fluorierte Verbindungen, Ether wie Dioxan oder Tetrahydrofuran, Ester wie z. B. Essigsäureethylester. Vorzugsweise wird die Polymerisation aber lösungsmittelfrei durchgeführt.

Falls gewünscht, kann die Polymerisationsreaktion in Gegenwart von Molekulargewichtsregeln durchgeführt werden. Als Regler seien aufgeführt Mercaptane wie n- oder tert.-Dodecylmercaptan, Thioglykol, Thioglycerin oder Thioessigsäureester. Ferner schwefelfreie Molekulargewichtsregler wie Kohlenwasserstoffe, beispielhaft seien genannt Paraffinverbindungen wie z. B. Petrolether, Leicht- oder Waschbenzin, α-Olefine mit bis zu 32 C-Atomen wie z. B. Propylen, Isobutylen, Buten-1, Diisobutylen, ferner Ketone wie z. B. Aceton, Methylethylketon oder Cyclohexanon, ferner Aldehyde wie z. B. Formaldehyd, Acetaldehyd, Propionaldehyd, Isobutyraldehyd oder Allylverbindungen wie z. B. Allylalkohol, Allylacetat, Isobutendiacetat oder Allylcarbonate.

Ferner sind als Molekulargewichtsregler für das erfindungsgemässe Verfahren Enolether geeignet, die sich einerseits von aliphatischen oder cycloaliphatischen Aldehyden oder Ketonen und andererseits von Alkyl-, Cycloalkyl- oder Aralkylalkoholen ableiten. Die cycloaliphatischen Aldehyde oder Ketone können im Ring substituiert oder überbrückt sein und/oder eine Doppelbindung enthalten. Beispielhaft seien Butyraldehyd, Valeraldehyd, Cyclohexylaldehyd, Cyclohexenylaldehyd, Bicyclo-[2.2.1]-hexenylaldehyd und Cyclohexanon genannt. Bevorzugt sind die cycloaliphatischen Aldehyde oder Ketone, die ggf. durch eine oder zwei $C_1$-$C_5$-Alkylgruppen, insbesondere durch Methylgruppen im Ring substituiert sind.

Geeignete Alkohole sind $C_1$-$C_{20}$-Alkanole, die ggf. verzweigt oder ungesättigt sein können, sowie $C_5$-$C_{10}$-Cycloalkanole und $C_7$-$C_{20}$-Aralkylalkohole, deren Cycloalkyl- bzw. Arylgruppe ggf. durch niedere Alkylreste substituiert sein können. Als Beispiele seien Methanol, Ethanol, n-Propanol, Isobutanol, 2-Ethylhexanol, Cyclohexanol und Benzylalkohol genannt.

Die Herstellung von Enolethern ist ausführlich in der Literatur beschrieben, zum Beispiel in Houben-Weyl, „Methoden der Organischen Chemie", Bd. VI/3, S. 90, Georg Thieme Verlag, Stuttgart, 1965.

Die als Molekulargewichtsregler verwendeten Enolether werden in Mengen von 0,01-10 Gew.-%, vorzugsweise von 0,05-1 Gew.-%, bezogen auf die Summe der Monomeren, eingesetzt. Die Zugabe der Enolether während der Polymerisation kann zu jedem beliebigen Zeitpunkt erfolgen, vorzugsweise wird der als Regler verwendete Enolether zu Beginn der Polymerisation zugesetzt.

Als Telogene kommen ferner in Frage Halogenkohlenwasserstoffe wie Methylenchlorid, Tetrachlorethan, Dibromethan usw. Wie zu erwarten, lassen sich mit Hilfe derartiger Regler die Viskositäten der Dispersionen steuern.

Die Herstellung der Pfropfpolymerisationsdispersionen geschieht in der Weise, dass Mischungen aus einem endständig vinyl-funktionellen Organopolysiloxan, einem Methylhydrogenpolysiloxan und einem oder mehrerer Vinylmonomeren in Gegenwart eines Radikalbildners auf eine die Polymerisation auslösende Reaktionstemperatur gebracht werden. Falls gewünscht, können auch Mischungen aus endständig vinyl-funktionellen und nichtfunktionellen Organopolysiloxanen in die Reaktionsmischung eingetragen werden. Die Polymerisation kann nach kontinuierlichem oder diskontinuierlichem Verfahren durchgeführt werden. Im Prinzip ist die Reihenfolge der Zugabe der zur Reaktion zu bringenden Komponenten beliebig, die besten Resultate werden aber erzielt, wenn Mischungen aus Vinyl-Siloxan und Hydrogensiloxan und Vinylmonomeren gleichzeitig bei der Durchführung der Polymerisationsreaktion eingesetzt werden.

Die Umsetzung der eingesetzten Monomeren wird vom gewählten Polymerisationsverfahren und den Reaktionsbedingungen bestimmt. Bei der diskontinuierlichen Polymerisationsweise werden möglichst hohe Umsätze angestrebt, so dass mindestens 80% der eingesetzten Monomeren, vorzugsweise aber mehr als 90% umgesetzt werden.

Die Entfernung der Restmonomeren erfolgt nach bekannten Verfahren destillativ bei Normaldruck oder unter vermindertem Druck. Die nach der Aufarbeitung in den Dispersionen noch effektiv gefundenen Restmonomergehalte sind vernachlässigbar gering, sie liegen im allgemeinen unter 1000 ppm, vorzugsweise unter 100 ppm.

Die erfindungsgemäss erhaltenen Silicon-Vinylmonomer-Dispersionen sind Hydrophobierungsmittel und geeignet für Beschichtungs- und Ausrüstungssysteme von natürlichen oder synthetischen Ledern sowie natürlichen oder synthetischen Fasern, Fäden oder textilen Flächengebilden sowie geeignet als Verlaufs- und Verarbeitungshilfsmittel für verschiedene Anwendungen im Kunststoff- und Lackbereich. Weiterhin sind sie als Bestandteil von Elastomer-Systemen geeignet.

Bei der Verwendung der erfindungsgemässen Pfropfdispersionen als Beschichtungsmittel für z. B. textile Substrate oder Leder oder Kunstleder kann katalytisch oder thermisch eine Vernetzung erfolgen. Bei der Vernetzung mit Platin- oder Platinverbindungen empfiehlt es sich, entsprechende Inhibitoren wie z. B. Acetylenalkohole, insbesondere Methylentinol, einzusetzen.

Die Vernetzung kann auch mit Hilfe von Radikalbildnern oder durch UV-Strahlen erfolgen.

Beim Einsatz in Elastomer-Systemen können die Pfropfdispersionen mit den üblichen Füllstoffen, Hilfsmitteln und ggf. Pigmenten versetzt werden.

Die erfindungsgemäss erhaltenen Silicon-Vinyl-Polymer-Dispersionen besitzen ein gegenüber reinen Siliconen entsprechender Viskosität vergleichsweise günstigeres Emulgierverhalten.

Sie lassen sich relativ leicht mit Hilfe der bekannten Emulgatoren und Emulgiertechniken in stabile Emulsionen überführen.

Die verwendeten Emulgatoren bestehen zweckmässigerweise aus einer Mischung einer hydrophilen und einer hydrophoben Komponente. Geeignete Verbindungen sind z. B. Fettsäureester mehrwertiger Alkohole, wie z. B. Stearinsäureester von Glycolen, Glycerin oder Sorbit, sowie höhere Fettalkohole oder die Anlagerungsprodukte von Ethylenoxid an diese Fettalkohole, Fettsäuren oder ähnliche Verbindungen mit aktivem Wasserstoffatom. Geeignet sind aber auch anionaktive Emulgatoren wie Natriumlaurylsulfat oder Natriumdodecylbenzolsulfonat oder Alkyl-, Aryl- bzw. Alkylarylcarboxylate oder auch kationaktive Emulgatoren wie quarternäre Ammoniumverbindungen.

Die folgenden Beispiele sollen die Erfindung näher erläutern, ohne sie in ihrem Umfang einzuschränken.

Wenn nicht anders vermerkt, sind Mengenangaben als Gewichtsteile bzw. Gewichtsprozente zu verstehen.

*Herstellung der Ausgangssubstanzen:*

Die Herstellung der Polydiorganosiloxane erfolgt in an sich bekannter Weise (vergl. W. Noll, „Chemie und Technologie der Silicone", Verlag Chemie, Weinheim/Bergstrasse, 2. Aufl., 1968, Kap. 5, S. 162 ff.).

Die in den Beispielen aufgeführten Siloxane sind wie folgt gekennzeichnet:

| Polysiloxan | Beschreibung | Viskosität mPa · s (25°C) |
|---|---|---|
| A | Trimethylsilylgruppenterminiert | 1000 |
| B | Vinylgruppenhaltig, sowohl endständig als auch in der Kette | 10000 |
| C | Si-H-haltig, trimethylsilylgruppenterminiert | 20 |
| D | Si-H-haltig, trimethylsilylgruppenterminiert | 800 |

*Beispiel 1:*

In einem 40 l-Autoklaven mit Rückflusskühler werden 10,5 kg eines Polysiloxans B, 9 kg eines Polysiloxans C vorgelegt und unter Stickstoffüberleitung auf 110°C erwärmt. Dann werden gleichzeitig 2 Lösungen innerhalb von 5 h hinzugegeben:

*Lösung 1:* 7,5 kg n-Butylacrylat.
*Lösung 2:* 1,5 kg Polysiloxan C,
45 kg t-Butylperpivalat.

Der Ansatz wird 1 h nachgerührt und dann werden die flüchtigen Anteile destillativ entfernt.

Viskosität bei 25°C: 12000 mPa · s.
Zusammensetzung:
37% Einheiten aus Polysiloxan B,
37% Einheiten aus Polysiloxan C,
26% polymerisierte Einheiten aus n-Butylacrylat.

*Beispiel 2:*

In einem 6 l-Rührkessel werden unter Stickstoff 1500 g Polysiloxan B, 750 g Polysiloxan D, 750 g Polysiloxan C, 1 g Tetrahydrobenzaldehydenolether auf 150°C aufgeheizt. Dann werden zwei Lösungen gleichzeitig innerhalb von 4 h hinzugegeben.

*Lösung 1:* 1000 g n-Butylacrylat.
*Lösung 2:* 500 g Polysiloxan C,
10 g tert.-Butylperoctoat,
4 g Tetrahydrobenzaldehydbenzylenolether.

Der Ansatz wird 1 h bei 150°C nachgerührt, sodann evakuiert und praktisch vollständig von nicht umgesetzten Monomeren befreit. Das erhaltene Pfropfpolymerisat weist eine Viskosität von 1500 mPa · s bei 25°C auf und weist eine Zusammensetzung auf, die einem 88%igen Monomerumsatz entspricht.

*Beispiel 3:*

In einem 6 l-Rührkessel werden unter Schutzgas 3 kg Polysiloxan B, 150 g Polysiloxan C auf 110°C erwärmt. Dann wird eine Lösung aus
1,75 kg n-Butylacrylat,
15 g Tetrahydrobenzaldehydbenzylenolether,
7,5 g t-Butylperpivalat
in 5 h hinzugepumpt. Man rührt 1 h nach und zieht die flüchtigen Anteile im Vakuum ab. Das Endprodukt hat bei 25°C eine Viskosität von 40 Pa · s und folgende Zusammensetzung:
28% polymerisierte Einheiten aus Butylacrylat,
3% Einheiten aus Polysiloxan C,
69% Einheiten aus Polysiloxan B.

*Beispiele 4 und 5:*

In einen 6 l-Rührkessel werden unter Stickstoff die unter Vorlage angegebenen Komponenten eingefüllt und auf 110°C erwärmt. Innerhalb von 3 h wird die Monomer-Initiatorlösung hinzugegeben und dann 1 h nachgerührt. Nach Abziehen der flüchtigen Anteile im Vakuum wird abgekühlt.

| Beispiel | *Vorlage* | |
|---|---|---|
| | Polysiloxan | |
| | B | C |
| 4 | 1250 | 1250 |
| 5 | 1250 | 1250 |

| Beispiel | Lösung | | | |
|---|---|---|---|---|
| | n-Butylacrylat | Oxiester | Acrylamid | t-Butylperpivalat |
| 4 | 1960 | 40 | — | 12 g |
| 5 | 1960 | — | 40 | 12 g |

| Beispiel | Destillatmenge | Viskosität mPa · s, 25°C |
|---|---|---|
| 4 | 7 g | 61000 |
| 5 | 59 g | 90000 |

*Beispiel 6:*

In einem 6 l-Stahlautoklaven werden 900 g Polysiloxan C und 600 g Polysiloxan B, 2,5 g di-tert.-

Butylperoxid und 450 g Vinylidenfluorid vorgelegt. Der Ansatz wird auf 125° C erwärmt und 30 min bei 125° C gerührt. Dann werden Lösung 1 und 2 innerhalb von 3 h hinzugegeben.

*Lösung 1:* 250 g Polysiloxan C,
12,5 g di-tert.-Butylperoxid.

*Lösung 2:* 1300 g Vinylidenfluorid.

Der Ansatz wird 1 h bei 125° C nachgerührt, vorsichtig entspannt und evakuiert. Die flüchtigen Anteile werden abgezogen. Das Pfropfpolymerisat enthält

45 Gew.-% polymerisierte Einheiten aus Vinylidenfluorid,
22 Gew.-% Einheiten aus Polysiloxan B,
33 Gew.-% Einheiten aus Polysiloxan C.

*Beispiel 7:*

Zu 40,0 kg einer Pfropfcopolymerdispersion des Beispiels 1 werden unter Rühren 1,4 kg eines mit 50 mol Ethylenoxid umgesetzten Oleylalkoholes und 1,2 kg eines mit 6 mol Ethylenoxid umgesetzten Tridecylalkohols gegeben. Die Mischung wird auf 60° C erwärmt und unter Rühren werden 57,4 kg entionisiertes Wasser eingearbeitet. Man erhält eine homogene und stabile Emulsion des Pfropfcopolymers. Ggf. kann zur feineren Verteilung mittels einer Hochdruckhomogenisiermaschine (z. B. Alfa-Laval, Typ SH 20) in einem oder mehreren Gängen bei 200 bar homogenisiert werden.

*Beispiele 8 bis 12:*

In gleicher Verfahrensweise, wie in Beispiel 7 erläutert, erhält man Emulsionen aus den Copolymerisaten in folgenden Zusammensetzungen:

| Beispiel Nr. | Pfropfcopolymer des Beispiels | Gew.-% | Emulgator | Hochdruck-homogenisierung |
|---|---|---|---|---|
| 8 | 2 | 40 | 1,5% Oleyl-50-ethoxylat | — |
| 9 | 3 | 40 | 1,5% Oleyl-50-ethoxylat | — |
| 10 | 4 | 35 | 1,4% Sorbitantrioleat<br>1,2% Oleyl-50-ethoxylat | 2mal 200 bar |
| 11 | 5 | 45 | 1,0% Sorbitantrioleat | 1mal 200 bar |
| 12 | 6 | 30 | 1,5% Oleyl-50-trioleat<br>1,5% Decenol-4-ethoxylat | 2mal 200 bar |

**Patentansprüche**

1. Pfropfpolymerisat-Dispersionen enthaltend als Pfropfsubstrat

1 bis 99 Gew.-% Organopolysiloxane, bestehend aus einem Gemisch von

A) Si-H-Gruppen enthaltenden Organopolysiloxanen,
B) Vinylgruppen enthaltenden Organopolysiloxanen und ggf.
C) weiteren Polydiorganosiloxanen, und

als aufgepfropfte Polymerphase 99 bis 1 Gew.-% polymerisierte Einheiten von Vinylmonomeren.

2. Vernetzbare Pfropfpolymerisat-Dispersionen gemäss Anspruch 1, dadurch gekennzeichnet, dass sie aus

24 bis 76 Gew.-% Organopolysiloxankomponente, enthaltend:

A) 1 bis 99 Gew.-%, vorzugsweise 5 bis 85 Gew.-% Si-H-Gruppen enthaltende Organopolysiloxane,
B) 99 bis 1 Gew.-%, vorzugsweise 95 bis 15 Gew.-% Vinylgruppen enthaltende Organopolysiloxane,
C) 0 bis 50 Gew.-%, vorzugsweise 0 bis 35 Gew.-% Polydiorganosiloxane, und

76 bis 24 Gew.-% polymerisierte Einheiten aus Vinylmonomeren, bestehen.

3. Pfropfpolymerisat-Dispersionen gemäss einem der Ansprüche 1 oder 2, dadurch gekennzeichnet, dass ein Teil der Si-H-Gruppen als entsprechendes Polysiloxan durch Monoadditionsreaktion der Vinylmonomeren substituiert wird.

4. Verfahren zur Herstellung vernetzbarer Pfropfpolymerisatdispersionen, gemäss einem der Ansprüche 1 oder 2, dadurch gekennzeichnet, dass

I. 1 bis 98,999 Gew.-%, vorzugsweise 15 bis 79,9 Gew.-% Organopolysiloxankomponente, enthaltend

A) 1 bis 99 Gew.-%, vorzugsweise 5 bis 85 Gew.-% Si-H-Gruppen enthaltende Organopolysiloxane,
B) 99 bis 1 Gew.-%, vorzugsweise 95 bis 15 Gew.-% Vinylgruppen enthaltende Organopolysiloxane,
C) 0 bis 50 Gew.-%, vorzugsweise 0 bis 35 Gew.-% Polydiorganosiloxane, und

II. 98,999 bis 1 Gew.-%, vorzugsweise 83,5 bis 20 Gew.-% Vinylmonomere,

III. 0 bis 10 Gew.-%, vorzugsweise 0 bis 2 Gew.-% Molekulargewichtsregler, und

IV. 0,001 bis 10 Gew.-%, vorzugsweise 0,1 bis 1,5 Gew.-% Initiator

bei Reaktionstemperaturen zwischen −20 und 250° C, vorzugsweise 40 bis 150° C und bei Reaktionsdrucken bis 500 bar, vorzugsweise bis 20 bar einer Polymerisationsreaktion unterzogen werden.

5. Wässerige Dispersionen aus Pfropfpolymerisatdispersionen der Ansprüche 1 bis 3.

6. Ggf. unter Zusatz von Füllstoffen, Härtungskatalysatoren und zusätzlichen Vernetzern aus den

Pfropfpolymerisatdispersionen der Ansprüche 1 bis 3 erhaltene vernetzte Massen.

## Claims

1. Graft polymer dispersions containing as the graft substrate 1 to 99% by weight of organopolysiloxanes consisting of a mixture of
 (*A*) organopolysiloxanes containing Si-H groups,
 (*B*) organopolysiloxanes containing vinyl groups and optionally
 (*C*) further polydiorganosiloxanes and
as the grafted-on polymer phase 99 to 1% by weight of polymerised units of vinyl monomers.

2. Crosslinkable graft polymer dispersions according to Claim 1, characterised in that they consist of 24 to 76% by weight of an organopolysiloxane component containing:
 (*A*) 1 to 99% by weight, preferably 5 to 85% by weight, of organopolysiloxanes containing Si-H groups,
 (*B*) 99 to 1% by weight, preferably 95 to 15% by weight, of organopolysiloxanes containing vinyl groups,
 (*C*) 0 to 50% by weight, preferably 0 to 35% by weight, of polydiorganosiloxanes and
76 to 24% by weight of polymerised units of vinyl monomers.

3. Graft polymer dispersions according to one of Claims 1 or 2, characterised in that some of the Si-H groups, as the corresponding polysiloxane, are substituted by a monoaddition reaction of the vinyl monomers.

4. Process for the production of crosslinkable graft polymer dispersions according to one of Claims 1 or 2, characterised in that
 I. 1 to 98.999% by weight, preferably 15 to 79.9% by weight, of an organopolysiloxane component containing
 (*A*) 1 to 99% by weight, preferably 5 to 85% by weight, of organopolysiloxanes containing Si-H groups,
 (*B*) 99 to 1% by weight, preferably 95 to 15% by weight, of organopolysiloxanes containing vinyl groups,
 (*C*) 0 to 50% by weight, preferably 0 to 35% by weight, of polydiorganosiloxanes and
 II. 98.999 to 1% by weight, preferably 83.5 to 20% by weight, of vinyl monomers,
 III. 0 to 10% by weight, preferably 0 to 2% by weight, of molecular weight regulators and
 IV. 0.001 to 10% by weight, preferably 0.1 to 1.5% by weight, of an initiator,
are subjected to a polymerisation reaction at reaction temperatures of between −20 and 250° C, preferably 40 to 150° C, and under reaction pressures of up to 500 bars, preferably up to 20 bars.

5. Aqueous dispersions obtained from graft polymer dispersions of Claims 1 to 3.

6. Crosslinked compositions obtained from the graft polymer dispersions of Claims 1 to 3, optionally with the addition of fillers, hardening catalysts and additional crosslinking agents.

## Revendications

1. Dispersions de polymères greffés contenant comme substrat de greffage 1 à 99% en poids d'organopolysiloxanes consistant en un mélange
 A) d'organopolysiloxanes contenant des groupes Si-H,
 B) d'organopolysiloxanes contenant des groupes vinyle, et
 C) d'autres polydiorganosiloxanes et,
en tant que phase polymère greffée, 99 à 1% en poids d'unités polymérisées de monomères vinyliques.

2. Dispersions de polymères greffés réticulables selon la revendication 1, caractérisées en ce qu'elles se composent de 24 à 76% en poids de composant organopolysiloxane qui contient
 A) 1 à 99% en poids, de préférence 5 à 85% en poids d'organopolysiloxanes contenant des groupes Si-H,
 B) 99 à 1% en poids, de préférence 95 à 15% en poids d'organopolysiloxanes contenant des groupes vinyle,
 C) 0 à 50% en poids, de préférence 0 à 35% en poids de polydiorganosiloxanes, et de
76 à 24% en poids d'unités polymérisées de monomères vinyliques.

3. Dispersions de polymères greffés selon l'une des revendications 1 ou 2, caractérisées en ce qu'une partie des groupes Si-H, sous la forme du polysiloxane correspondant, est substituée par une réaction de monoaddition des monomères vinyliques.

4. Procédé de fabrication de dispersions de polymères greffés réticulables selon l'une des revendications 1 ou 2, caractérisé en ce qu'on soumet à une réaction de polymérisation
 I. 1 à 98,999% en poids, de préférence 15 à 79,9% en poids d'un composant organopolysiloxane contenant
 A) 1 à 99% en poids, de préférence 5 à 85% en poids d'organopolysiloxanes contenant des groupes Si-H,
 B) 99 à 1% en poids, de préférence 95 à 15% en poids d'organopolysiloxanes contenant des groupes vinyle,
 C) 0 à 50% en poids, de préférence 0 à 35% en poids de polydiorganosiloxanes, et
 II. 98,999 à 1% en poids, de préférence 83,5 à 20% en poids de monomères vinyliques,
 III. 0 à 10% en poids, de préférence 0 à 2% en poids de régulateur de poids moléculaire, et
 IV. 0,001 à 10% en poids, de préférence 0,1 à 1,5% en poids d'initiateur,
à des températures de réaction comprises entre −20 et 250° C, de préférence de 40 à 150° C, sous des pressions de réaction allant jusqu'à 500 bars, de préférence jusqu'à 20 bars.

5. Dispersions aqueuses de dispersions de polymères greffés des revendications 1 à 3.

6. Masses réticulées obtenues à partir des dispersions de polymères greffés des revendications 1 à 3, éventuellement avec une addition de matières de charge, de catalyseurs de durcissement et de réticulants supplémentaires.